# EUROPEAN PATENT APPLICATION

(11) **EP 4 606 450 A1**
(43) Date of publication of application: **27.08.2025**
(21) Application number: 23879624.7
(22) Date of filing: 05.10.2023
(51) Int. Cl.: B01D 19/04, C10N 20/04, C10N 30/06, C10N 30/18, C10N 40/00, C10N 40/02, C10N 40/13, C10N 40/25, C10M 139/04

(54) **ANTIFOAMING AGENT, LUBRICATING OIL COMPOSITION CONTAINING SAID ANTIFOAMING AGENT, AND MACHINE EMPLOYING SAID LUBRICATING OIL COMPOSITION**

(30) Priority: 20.10.2022 JP 2022168232
(71) Applicant: DIC Corporation, Tokyo 174-8520 (JP)
(72) Inventor: FUJIWARA Ryuta, Ichihara-shi, Chiba 290-8585 (JP); UENO Junpei, Ichihara-shi, Chiba 290-8585 (JP)
(74) Representative: TBK
(86) International application number: PCT/JP2023/036312
(87) International publication number: WO 2024/084977

(57) **Abstract**

Provided is a defoaming agent exhibiting excellent defoaming property in a high temperature environment. Specifically, a defoaming agent includes a polymer having, as at least a polymerization component, a polymerizable monomer (A) having two or more groups represented by general formula (a) below (R¹¹s are each independently an alkyl group having 1 to 6 carbon atoms, a phenyl group, or a group represented by -OSi(R¹⁴)₃ (R¹⁴ are each independently an alkyl group having 1 to 6 carbon atoms or a phenyl group); R¹²s are each independently an alkyl group having 1 to 6 carbon atoms or a phenyl group; R¹³ is an alkyl group having 1 to 6 carbon atoms or a phenyl group; and x represents the number of repetitions).

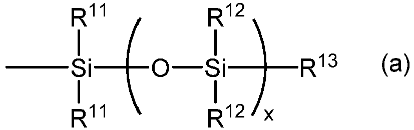

## Description

### Technical Field

The present invention relates to a defoaming agent, a lubricant composition containing the defoaming agent, and a machine using the lubricant composition.

### Background Art

In recent years, emission reduction of carbon dioxide has become an important theme in the industrial field. In particular, the emission of carbon dioxide from transport equipment including automobiles occupies near 20% of the total emission, and replacement of gasoline vehicles with electric vehicles (EV) is set out as a policy of various countries as a countermeasure for reducing the emission.

A most important issue of EV is to improve fuel efficiency and, therefore, examination of miniaturization of car bodies, higher efficiency of drive systems, and the like is progressed at a rapid pace. One of problems with higher efficiency of drive systems is foaming of a lubricant. A decrease in viscosity of a lubricant is advanced for deceasing frictional resistance, but the decrease in viscosity easily causes foaming of the lubricant. Also, miniaturization of the drive system of EV decreases gaps and also decreases the tolerance of foaming.

When high-load driving or high-speed running is continued, there may occur problems: such as an increase of foaming in a lubricant with lower viscosity; decreases in lubricating performance and cooling efficiency due to foaming; the occurrence of wear and image-sticking due to the breakage of an oil film at a friction position; acceleration of deterioration of a lubricant due to an increase in oil temperature; and the like.

Therefore, a lubricant having a high defoaming property is required, and a defoaming agent for preventing foaming is added to a lubricant. A polysiloxane-based defoaming agent is known as the defoaming agent, and various polysiloxane-based defoaming agents are proposed (for example, Patent Literatures 1 to 4).

### Citation List

### Patent Literature

PTL 1: Japanese Unexamined Patent Application Publication No. 2014-62259
PTL 2: WO2015/087628
PTL 3: Japanese Unexamined Patent Application Publication (Translation of PCT Application) No. 2008-542462
PTL 4: Japanese Unexamined Patent Application Publication (Translation of PCT Application) No. 2008-542010

### Summary of Invention

### Technical Problem

A usual polysiloxane-based defoaming agent has the problem of greatly decreasing the defoaming property with increases in temperature, and for example, in automobile application in which the defoaming property is required at a high temperature, there is the problem of failing to obtain the satisfactory defoaming property.

A problem to be solved by the present invention is to provide a defoaming agent exhibiting an excellent defoaming property even in a high-temperature environment.

Another problem to be solved by the present invention is to provide a lubricant composition which can exhibit excellent lubricating performance even in a high-temperature environment.

### Solution to Problem

As a result of earnest research for solving the problems described above, the inventors found that a polymer having, as at least a polymerization component, a polymerizable monomer having two or more specific silicone chain-containing functional groups is a defoaming agent exhibiting an excellent defoaming property even in a high-temperature environment, leading to the achievement of the present invention.

That is, the present invention relates to a defoaming agent including a polymer having, as at least a polymerization component, a polymerizable monomer (A) having two or more groups represented by general formula (a) below. 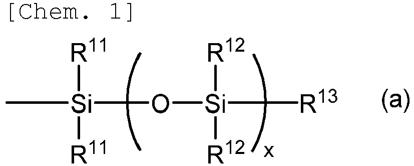 (In the general formula (a),
R¹¹s are each independently an alkyl group having 1 to 6 carbon atoms, a phenyl group, or a group represented by - OSi(R¹⁴)₃ (R¹⁴ are each independently an alkyl group having 1 to 6 carbon atoms or a phenyl group);
R¹²s are each independently an alkyl group having 1 to 6 carbon atoms or a phenyl group;
R¹³ is an alkyl group having 1 to 6 carbon atoms or a phenyl group; and
x represents the number of repetitions.)

### Advantageous Effects of Invention

The present invention can provide a defoaming agent exhibiting an excellent defoaming property even in a high-temperature environment.

The present invention can provide a lubricant composition which can exhibit excellent lubricating performance even in a high-temperature environment. Description of Embodiments

An embodiment of the present invention is described below. The present invention is not limited to the embodiment below, and can be carried out by making proper modification within a range not impairing the effect of the present invention.

### [Defoaming agent]

A defoaming agent of the present invention includes a polymer having, as at least a polymerization component, a polymerizable monomer (A) having two or more groups represented by general formula (a) below. 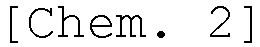 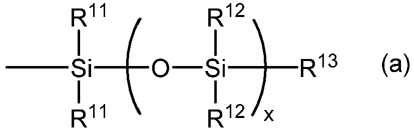 (In the general formula (a),
R¹¹s are each independently an alkyl group having 1 to 6 carbon atoms, a phenyl group, or a group represented by - OSi(R¹⁴)₃ (R¹⁴ are each independently an alkyl group having 1 to 6 carbon atoms or a phenyl group);
R¹²s are each independently an alkyl group having 1 to 6 carbon atoms or a phenyl group;
R¹³ is an alkyl group having 1 to 6 carbon atoms or a phenyl group; and
x represents the number of repetitions.)

The defoaming agent of the present invention has, in one polymerizable monomer, two or more silicone chain-containing functional groups represented by the general formula (a) and thus the density of the silicone chain-containing functional groups in the polymer is increased. As a result, the surface tension-decreasing ability is improved, and the defoaming agent is easily efficiently transferred to an air interface, thereby enabling to exhibit the high defoaming property even in a high-temperature environment.

In the present invention, the "polymerization component" represents a component constituting the polymer and does not include a solvent, a polymerization initiator, etc. not constituting the polymer.

In the present invention, the "polymerizable monomer" represents a compound having a polymerizable unsaturated group, and examples of the polymerizable unsaturated group possessed by the polymerizable monomer (A) include groups containing C=C such as a (meth)acryloyl group, (a (meth)acryloyloxy group, a (meth)acryloylamino group, a vinyl ether group, an ally group, a styryl group, a maleimide group, and the like. Among these, a (meth)acryloyl group and a (meth)acryloyloxy group are preferred in view of having easy availability of raw materials and good polymerization reactivity.

In addition, the number of the polymerizable unsaturated groups possessed by the polymerizable monomer may be 1 or 2 or more.

In the general formula (a), R¹¹ is preferably a methyl group or a trimethylsiloxy group, and R¹² and R¹³ are each preferably a methyl group.

The alkyl group having 1 to 6 carbon atoms as each of R¹¹, R¹², R¹³, and R¹⁴ may further have a substituent, and examples of the substituent include a hydroxyl group, an aryl group, and the like.

Also, the phenyl group as each of R¹¹, R¹², R¹³, and R¹⁴ may further have a substituent, and examples of the substituent include a hydroxyl group, an alkyl group, and the like.

In the general formula (a), x represents the number of repetitions and x may be, for example, an integer of 1 or more.

The number average of x is, for example, within a range of 1 to 150, preferably within a range of 1 to 100, more preferably within a range of 1 to 45, and still more preferably within a range of 1 to 35.

The number average value of x can be confirmed by measuring the number-average molecular weight of the polymerizable monomer (A) using a method described in Examples.

In the general formula (a), a plurality of R¹¹s may be the same as or different from each other. Similarly, a plurality of R¹²s may be the same as or different from each other.

The polymerizable monomer (A) is preferably a compound represented by general formula (a-1) below. 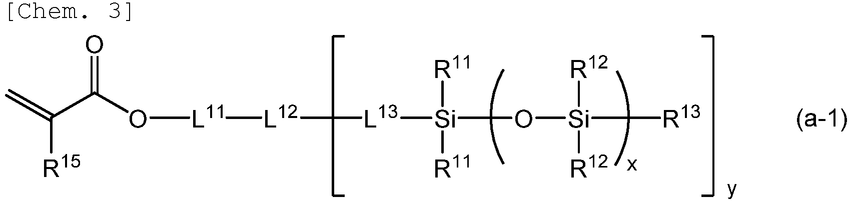 (In the general formula (a-1),
R¹¹, R¹², R¹³, and x are the same as R¹¹, R¹², R¹³, and x, respectively, in the general formula (a);
R¹⁵ is a hydrogen atom or a methyl group;
L¹¹ and L¹³ are each independently a divalent organic group or a single bond;
y is an integer within a range of 2 to 5; and
L¹² is a (y + 1)-valent organic group.)

L¹¹ and L¹³ are each preferably a single bond, an alkylene group having 1 to 50 carbon atoms, or an alkyleneoxy group having 1 to 50 carbon atoms.

Examples of the alkylene group having 1 to 50 carbon atoms as each of L¹¹ and L¹³ include a methylene group, an ethylene group, a n-propylene group, a n-butylene group, a n-pentylene group, a n-hexylene group, a n-heptylene group, a n-octylene group, a n-nonylene group, a n-decylene group, a n-dodecylene group, an isopropylene group, a 2-methylpropylene group, a 2-methylhexylene group, a tetramethylethylene group, and the like.

The alkylene group having 1 to 50 carbon atoms as each of L¹¹ and L¹³ is preferably an alkylene group having 1 to 15 carbon atoms, more preferably an alkylene group having 1 to 5 carbon atoms, and still more preferably a methylene group, an ethylene group, a n-propylene group, or an isopropylene group.

The alkyleneoxy group having 1 to 50 carbon atoms as each of L¹¹ and L¹³ is, for example, a group in which one - CH₂- in the alkylene group is substituted by -O-.

The alkyleneoxy group having 1 to 50 carbon atoms as each of L¹¹ and L¹³ is preferably an alkyleneoxy group having 1 to 15 carbon atoms, more preferably an alkyleneoxy group having 1 to 8 carbon atoms, and still more preferably a methyleneoxy group, an ethyleneoxy group, a propyleneoxy group, an oxytrimethylene group, a butyleneoxy group, an oxytetramethylene group, a pentyleneoxy group, a heptyleneoxy group, or an octyleneoxy group.

When the divalent organic group as each of L¹¹ and L¹³ is an alkylene group having 1 to 50 carbon atoms or an alkyleneoxy group having 1 to 50 carbon atoms, -CH₂- of the divalent organic group may be partially substituted by a carbonyl group (-C(=O)-), a phenylene group, a sulfide bond (-S-), an amide bond, or a urethane bond, and a hydroxyl group or the like may be further substituted to a carbon atom.

Examples of a (y + 1)-valent organic group as L¹² include a carbon atom, a benzene ring, and the like.

The polymerizable monomer (A) can be produced by, for example, reacting a polymerizable monomer having a silicone chain-containing functional group with an alcohol having two or more mercapto groups to synthesize a precursor having two or more silicone chain-containing functional groups and a hydroxyl group, and reacting the precursor with a polymerizable monomer having an isocyanate group.

Chemical formula below shows an example of a synthesis path for carrying out the production method described above, and a compound represented by general formula (a-1-1) can be produced as the polymerizable monomer (A). 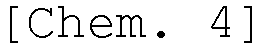 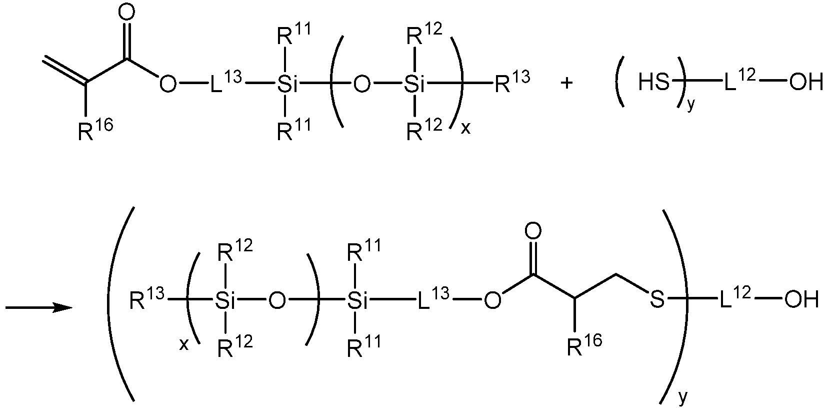 (In the formula, R¹⁶ is a hydrogen atom or a methyl group.) 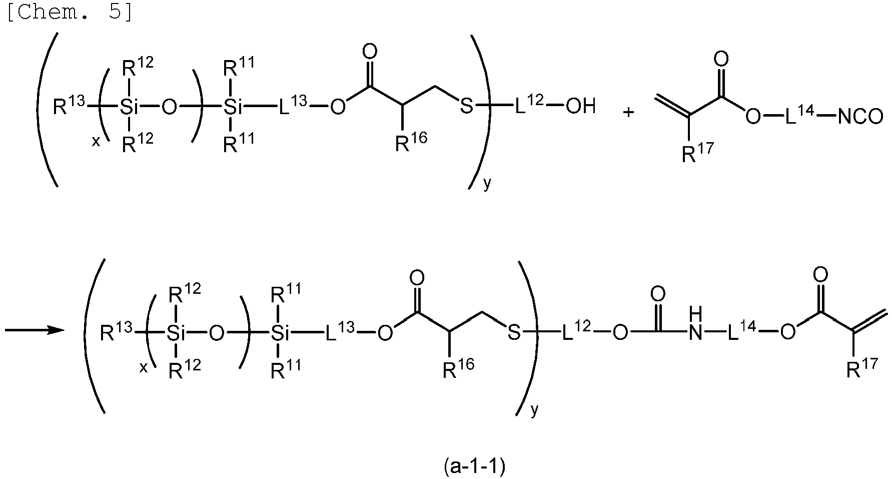 (In the formula,
R¹⁷ is a hydrogen atom or a methyl group; and
L¹⁴ is a divalent organic group or a single bond.)

Examples of the divalent organic group as L¹⁴ in the general formula (a-1-1) include the same as those of the divalent organic group as L¹¹.

The types of the polymerizable monomer (A) constituting the polymer (may be referred to the "polymer of the present invention" hereinafter) serving as the defoaming agent of the present invention may be one alone or two or more.

The weight-average molecular weight of the polymerizable monomer (A) is preferably within a range of 100 to 4,000.

Herein, the weight-average molecular weight is a value measured by a method described in Examples.

The lower limit of the content ratio of the polymerizable monomer (A) in the polymerization components (simply referred to as the "content ratio of the polymerizable monomer (A)" hereinafter) of the polymer of the present invention is, for example, 5% by mass or more, and preferably in the order of 10% by mass or more, 15% by mass or more, 20% by mass or more, 30% by mass or more, and 40% by mass or more.

The upper limit of the content ratio of the polymerizable monomer (A) is not particularly limited but, for example, 95% by mass or less, and preferably in the order of 90% by mass or less, 85% by mass or less, 80% by mass or less, 75% by mass or less, and 70% by mass or less.

The content ratio of the polymerizable monomer (A) can be adjusted by the charging ratio of the polymerizable monomer (A) for producing the polymer of the present invention.

The content ratio of the polymerizable monomer (A) in the total amount of polymerization components is preferably within a range of 20% to 80% by mass.

The polymer of the present invention preferably further contains, as a polymerization component, a polymerizable monomer (B) having one or more selected from the group consisting of an alkyl group having 1 to 18 carbon atoms, an aromatic group having 6 to 18 carbon atoms, a group containing a polyoxyalkylene chain, and a group containing a polyester chain.

The alkyl group having 1 to 18 carbon atoms possessed by the polymerizable monomer (B) may be any one of a linear alkyl group, a branched alkyl group, and a cyclic alkyl group, and specific examples thereof include a methyl group, an ethyl group, a normal propyl group, an isopropyl group, a n-butyl group, a tert-butyl group, a n-hexyl group, a cyclohexyl group, a n-octyl group, a hexadecyl group, and the like.

The alkyl group having 1 to 18 carbon atoms possessed by the polymerizable monomer (B) is preferably an alkyl group having 1 to 6 carbon atoms.

Examples of the aromatic group having 6 to 18 carbon atoms possessed by the polymerizable monomer (B) include a phenyl group, a naphthyl group, an anthracen-1-yl group, a phenathren-1-yl group, and the like.

The group containing a (poly)oxyalkylene chain possessed by the polymerizable monomer (B) is a monovalent group containing an oxyalkylene repeating part or a divalent linking group containing an oxyalkylene repeating part.

The group containing a polyester chain possessed by the polymerizable monomer (B) is a monovalent group containing an ester bond repeating part or a divalent linking group containing an ester bond repeating part.

The alkyl group having 1 to 18 carbon atoms possessed by the polymerizable monomer (B) may further have a substituent, and examples of the substituent include a hydroxyl group, an aryl group, and the like.

The aromatic group having 6 to 18 carbon atoms possessed by the polymerizable monomer (B) may further have a substituent, and examples of the substituent include a hydroxyl group, an alkyl group, and the like.

Examples of the polymerizable monomer (B) having an alkyl group having 1 to 18 carbon atoms and a (meth)acryloyl group as a polymerizable unsaturated group include (meth)acrylic acid alkyl esters having 1 to 18 carbon atoms, such as methyl (meth)acrylate, ethyl (meth)acrylate, n-propyl (meth)acrylate, isopropyl (meth)acrylate, n-butyl (meth)acrylate, s-butyl (meth)acrylate, isobutyl (meth)acrylate, tert-butyl (meth)acrylate, n-pentyl (meth)acrylate, n-hexyl (meth)acrylate, n-heptyl (meth)acrylate, n-octyl (meth)acrylate, 2-ethylhexyl (meth)acrylate, decyl (meth)acrylate, dodecyl (meth)acrylate, stearyl (meth)acrylate, isostearyl (meth)acrylate, and the like; (meth)acrylic acid crosslinked cyclic alkyl esters having 1 to 18 carbon atoms, such as dicyclopentanyloxyl ethyl (meth)acrylate, isobornyloxyl ethyl (meth)acrylate, isobornyl (meth)acrylate, adamantly (meth)acrylate, dimethyladamantyl (meth)acrylate, dicyclopentanyl (meth)acrylate, dicyclopentenyl (meth)acrylate, and the like; and the like.

In the present specification, "(meth)acrylate" represents both "methacrylate" and "acrylate".

Examples of the polymerizable monomer (B) having a phenylalkyl group having 7 to 18 carbon atoms or a phenoxyalkyl group having 7 to 18 carbon atoms and a (meth)acryloyl group as a polymerizable unsaturated group include benzyl (meth)acrylate, phenoxymethyl (meth)acrylate, 2-phenoxyethyl (meth)acrylate, and the like.

Examples of the polymerizable monomer (B) having an alkyl group having 1 to 18 carbon atoms and a vinyl ether group as a polymerizable unsaturated group include alkyl vinyl ethers such as methyl vinyl ether, ethyl vinyl ether, n-propyl vinyl ether, isopropyl vinyl ether, n-butyl vinyl ether, isobutyl vinyl ether, tert-butyl vinyl ether, n-pentyl vinyl ether, n-hexyl vinyl ether, n-octyl vinyl ether, n-dodecyl vinyl ether, 2-ethylhexyl vinyl ether, cyclohexyl vinyl ether, and the like; cycloalkyl vinyl ethers; and the like.

Examples of the polymerizable monomer (B) having an aromatic group having 6 to 18 carbon atoms include styrene, α-methylstyrene, p-methylstyrene, p-methoxystyrene, and the like.

Examples of the polymerizable monomer (B) having an alkyl group having 1 to 18 carbon atoms and a (meth)acryloylamino group as a polymerizable unsaturated group include N,N-dimethylacrylamide, N,N-diethylacrylamide, N-isopropylacrylamide, diacetone acrylamide, acryloylmorpholine, and the like.

Examples of the polymerizable monomer (B) having an alkyl group having 1 to 18 carbon atoms and a maleimide group as a polymerizable unsaturated group include methylmaleimide, ethylmaleimide, propylmaleimide, butylmaleimide, hexylmaleimide, octylmaleimide, dodecylmaleimide, stearylmaleimide, cyclohexylmaleimide, and the like.

Examples of the polymerizable monomer (B) having an group containing a polyoxyalkylene chain and a (meth)acryloyl group as a polymerizable unsaturated group include polypropylene glycol mono(meth)acrylate, polyethylene glycol mono(meth)acrylate, polytrimethylene glycol mono(meth)acrylate, polytetramethylene glycol mono(meth)acrylate, poly(ethylene glycol-propylene glycol) mono(meth)acrylate, polyethylene glycol-polypropylene glycol mono(meth)acrylate, poly(ethylene glycol-tetramethylene glycol) mono(meth)acrylate, polyethylene glycol-polytetramethylene glycol mono(meth)acrylate, poly(propylene glycol-tetramethylene glycol) mono(meth)acrylate, polypropylene glycol-polytetramethylene glycol mono(meth)acrylate, poly(propylene glycol-1,2-butylene glycol) mono(meth)acrylate, polypropylene glycol-poly-1,2-butylene glycol mono(meth)acrylate, poly(ethylene glycol-1,2-butylene glycol) mono(meth)acrylate, polyethylene glycol-poly-1,2-butylene glycol mono(meth)acrylate, poly(tetraethylene glycol-1,2-butylene glycol) mono(meth)acrylate, polytetraethylene glycol-poly-1,2-butylene glycol mono(meth)acrylate, poly-1,2-butylene glycol mono(meth)acrylate, poly(ethylene glycol-trimethylene glycol) mono(meth)acrylate, polyethylene glycol-polytrimethylene glycol mono(meth)acrylate, poly(propylene glycol-trimethylene glycol) mono(meth)acrylate, polypropylene glycol-polytrimethylene glycol mono(meth)acrylate, poly(trimethylene glycol-tetramethylene glycol) mono(meth)acrylate, polytrimethylene glycol-polytetramethylene glycol mono(meth)acrylate, poly(1,2-butylene glycol-trimethylene glycol) mono(meth)acrylate, poly-1,2-butylene glycol-polytrimethylene glycol mono(meth)acrylate, 2-hydroxyethyl (meth)acrylate, 2-hydroxypropyl (meth)acrylate, 2-hydroxybutyl (meth)acrylate, 4-hydroxybutyl (meth)acrylate, poly(1,2-butylene glycol-tetramethylene glycol) mono(meth)acrylate, poly-1,2-butylene glycol-polytetramethylene glycol mono(meth)acrylate, and the like.

The "poly(ethylene glycol-propylene glycol)" represents a random copolymer of ethylene glycol and propylene glycol, and the "polyethylene glycol-polypropylene glycol" represents a block copolymer of ethylene glycol and propylene glycol.

The polymerizable monomer (B) is preferably one or more selected from the group consisting of a compound represented by general formula (b-1) below, a compound represented by general formula (b-2) below, a compound represented by general formula (b-3) below, a compound represented by general formula (b-4) below, and a compound represented by general formula (b-5) below. 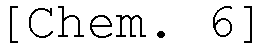 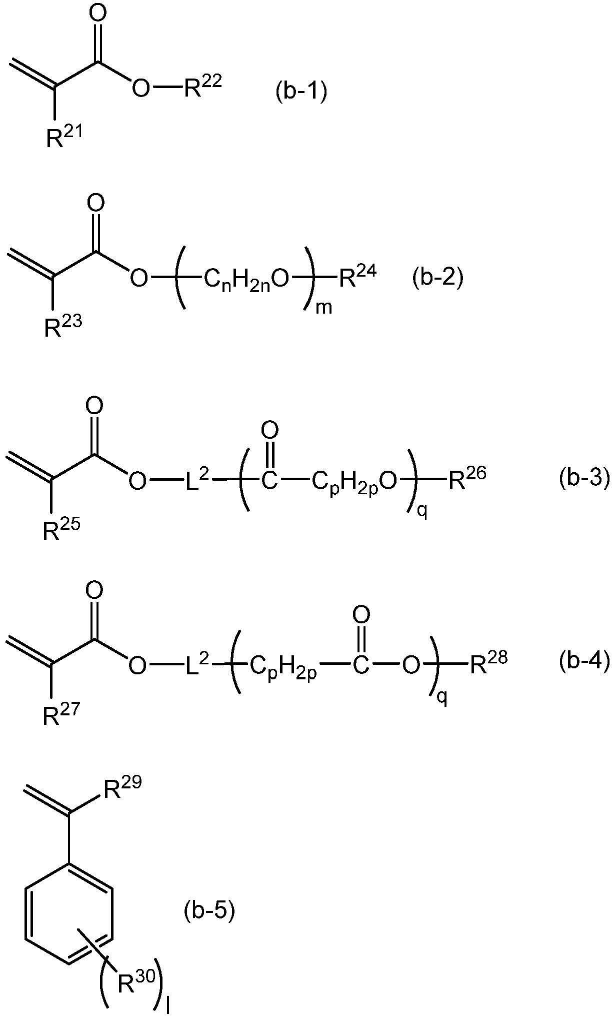 (In the general formulae (b-1), (b-2), (b-3), (b-4), and (b-5),
R²¹ is a hydrogen atom or a methyl group;
R²² is an alkyl group having 1 to 18 carbon atoms or a phenyl group;
R²³ is a hydrogen atom or a methyl group;
R²⁴ is a hydrogen atom, an alkyl group having 1 to 18 carbon atoms, or a phenyl group;
R²⁵ is a hydrogen atom or a methyl group;
R²⁶ is an alkyl group having 1 to 18 carbon atoms or an alkyl group having 1 to 18 carbon atoms and an ether bond;
R²⁷ is a hydrogen atom or a methyl group;
R²⁸ is an alkyl group having 1 to 18 carbon atoms or an alkyl group having 1 to 18 carbon atoms and an ether bond;
R²⁹ is a hydrogen atom or a methyl group;
R³⁰s are each independently an alkyl group having 1 to 6 carbon atoms or an alkoxy group having 1 to 6 carbon atoms;
L² is a divalent organic group or a single bond;
n is an integer within a range of 1 to 4;
m represents the number of repetitions;
p is an integer within a range of 1 to 10;
q represents the number of repetitions; and
l is an integer within a range of 0 to 5.)

In the general formula (b-2), m pieces of n in parenthesis may be the same as or different from each other.

In the general formula (b-3), q pieces of p in parenthesis may be the same as or different from each other.

In the general formula (b-4), q pieces of p in parenthesis may be the same as or different from each other.

The alkyl group having 1 to 18 carbon atoms as each of R²², R²⁴, R²⁶, and R²⁸ may further have a substituent, and examples of the substituent include a hydroxyl group, an aryl group, and the like.

The phenyl group as each of R²² and R²⁴ may further have a substituent, and examples of the substituent include a hydroxyl group, an alkyl group, and the like.

The alkyl group having 1 to 18 carbon atoms and an ether bond as each of R²⁶ and R²⁸ may further have a substituent, and examples of the substituent include a hydroxyl group, an aryl group, and the like.

The alkyl group having 1 to 6 carbon atoms as R³⁰ may further have a substituent, and examples of the substituent include a hydroxyl group, an aryl group, and the like.

The alkoxy group having 1 to 6 carbon atoms as R³⁰ may further have a substituent, and examples of the substituent include a hydroxyl group, an aryl group, and the like.

Examples of the divalent organic group as L² in the general formulae (b-3) and (b-4) include the same as those of the divalent organic group as L¹.

In the general formula (b-2), m represents the number of repetitions, and for example, m may be an integer of 1 or more. The number average of m is, for example, within a range of 1 to 200, preferably within a range of 1 to 150, and more preferably within a range of 1 to 100.

The number average value of m can be confirmed by measuring the number-average molecular weight of the polymerizable monomer (B) using a method described in Examples.

In the general formulae (b-3) and (b-4), q represents the number of repetitions, and for example, q may be an integer of 1 or more. The number average of q is, for example, within a range of 1 to 100, preferably within a range of 1 to 80, and more preferably within a range of 1 to 50.

The number average value of q can be confirmed by measuring the number-average molecular weight of the polymerizable monomer (B) using a method described in Examples.

The polymerizable monomer (B) preferably contains at least the compound represented by the general formula (b-2).

When the compound represented by the general formula (b-2) is contained as the polymerization component, excellent compatibility with a lubricant base oil described later can be obtained.

The polymerizable monomer (B) can be produced by a known method.

In addition, a commercial product may be used as the polymerizable monomer (B). Examples of a commercial product of the polymerizable monomer (B) having a group containing a polyoxyalkylene chain and a (meth)acryloyl group as the polymerizable unsaturated group include "NK Ester M-20G", "NK Ester M-40G", "NK Ester M-90G", "NK Ester M-230G", "NK Ester AM-90G", "NK Ester AMP-10G", "NK Ester AMP-20G", and "NK Ester AMP-60G" manufactured by Shin-Nakamura Chemical Co., Ltd., "Blemmer PE-90", "Blemmer PE-200", "Blemmer PE-350", "Blemmer PME-100", "Blemmer PME-200", "Blemmer PME-400", "Blemmer PME-4000", "Blemmer PP-1000", "Blemmer PP-500", "Blemmer PP-800", "Blemmer 70PEP-350B", "Blemmer 55PET-800", "Blemmer 50POEP-800B", "Blemmer 10PPB-500B", "Blemmer NKH-5050", "Blemmer AP-400", and "Blemmer AE-350" manufactured by NOF Corporation, Placcel F Series manufactured by Daicel Corporation, Viscoat Series manufactured by Osaka Organic Chemical Industry Ltd., and the like.

The type of the polymerizable monomer (B) constituting the polymer of the present invention may be one alone or two or more.

The mass ratio between the polymerizable monomer (A) and the polymerizable monomer (B) in the defoaming agent of the present invention, for example, satisfies polymerizable monomer (A) : polymerizable monomer (B) = 5:95 to 95:5, preferably satisfies polymerizable monomer (A) : polymerizable monomer (B) = 20:80 to 90:10, more preferably satisfies polymerizable monomer (A) : polymerizable monomer (B) = 30:70 to 80:20, and still more preferably satisfies polymerizable monomer (A) : polymerizable monomer (B) = 30:70 to 70:30.

The polymer of the present invention preferably further contains, as a polymerization component, a polymerizable monomer (C) having a group represented by the general formula (a).

The defoaming property of the defoaming agent can be more enhanced by combining the polymerizable monomer (A) having two or more silicone chain-containing functional groups with the polymerizable monomer (C) having one silicone chain-containing functional group.

The polymerizable monomer (C) is preferably a compound represented by general formula (c-1) below. 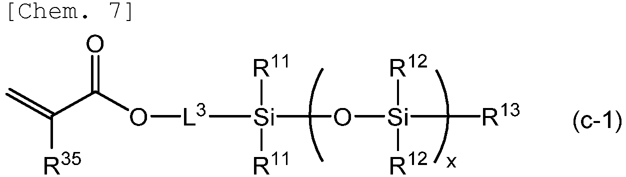 (In the general formula (c-1),
R¹¹, R¹², R¹³, and x are the same as R¹¹, R¹², R¹³, and x, respectively, of the general formula (a);
R³⁵ is a hydrogen atom or a methyl group; and
L³ is a divalent organic group or a single bond.)

A divalent organic group as L³ is the same as the divalent organic group as each of L¹¹ and L¹³ described above.

The content ratio of the polymerizable monomer (C) in the polymerization components of the polymer of the present invention is, for example, within a range of 0% to 50% by mass, preferably within a range of 3% to 30% by mass, and more preferably within a range of 5% to 20% by mass.

The content ratio of the polymerizable monomer (C) can be adjusted by the raw material charging ratio of the polymerizable monomer (C) for producing the defoaming agent of the present invention.

The defoaming agent of the present invention may be a polymer containing the polymerizable monomer (A) as at least a polymerization component, and the polymerization form thereof is not particularly limited. For example, when the defoaming agent of the present invention is a copolymer containing the polymerizable monomer (A), the polymerizable monomer (B), and/or the polymerizable monomer (C) at least polymerization components, the copolymer may be a random copolymer or a block copolymer.

The polymer of the present invention may contain the polymerizable monomer (A), the polymerizable monomer (B), and the arbitrary polymerizable monomer (C) at least polymerization components, and may contain, as a polymerization component, another polymerizable monomer other than the polymerizable monomer (A), the polymerizable monomer (B), and the polymerizable monomer (C) within a range not impairing the effects of the present invention.

The polymer of the present invention preferably a copolymer substantially composed of the polymerizable monomer (A), the arbitrary polymerizable monomer (B), and the arbitrary polymerizable monomer (C), and more preferably a copolymer composed of only the polymerizable monomer (A), the arbitrary polymerizable monomer (B), and the arbitrary polymerizable monomer (C). The expression "substantially composed of" represent the case where the total content ratio of the polymerizable monomer (A), the arbitrary polymerizable monomer (B), and the arbitrary polymerizable monomer (C) in the polymerization components is 75% by mass or more, 80% by mass or more, 90% by mass or more, 95% by mass or more, or 99% by mass or more.

The polymer of the present invention preferably does not contain a fluorine atom.

The number-average molecular weight (Mn) of the polymer of the present invention is preferably within a range of 1,000 to 50,000, more preferably within a range of 1,000 to 30,000, and still more preferably within a range of 1,500 to 10,000.

The weight-average molecular weight (Mw) of the polymer of the present invention is preferably within a range of 1,000 to 300,000, more preferably within a range of 1,500 to 250,000, still more preferably within a range of 2,000 to 200,000, and particularly preferably within a range of 3,000 to 15,000.

In the present invention, the weight-average molecular weight (Mw) and the number-average molecular weight (Mn) are values in terms of polystyrene based on gel permeation chromatography (GPC) measurement.

The number-average molecular weight (Mn) and the weight-average molecular weight (Mw) of the polymer of the present invention are measured by a method described in Examples.

### [Method for producing polymer]

A method for producing the polymer of the present invention is not particularly limited, and the polymer can be produced by a known method.

The polymer of the present invention can be produced by a solution polymerization method, a bulk polymerization method, an emulsion polymerization method, or the like based on the polymerization mechanism of a radical polymerization method, a cationic polymerization method, an anionic polymerization method, or the like. For example, in the radical polymerization method, the polymer of the present invention can be produced by charging a mixture of polymerizable monomers in an organic solvent and adding a general-purpose radical polymerization initiator.

Various polymerization initiators can be used as the polymerization initiator, and examples thereof include Peroxides such as tert-butylperoxy-2-ethyl hexanoate, benzoyl peroxide, diacyl peroxide, and the like, azo compounds such as azobisisobutyronitrile, dimethyl azobisisobutyrate, phenyl azotriphenylmethane, and the like, metal chelate compounds such as Mn(acac)₃ and the like, and the like.

If required, a chain transfer agent such as lauroyl mercaptan, 2-mercaptoethanol, ethylthioglycolic acid, octylthioglycolic acid, or the like, or a chain transfer agent such as a coupling group-containing thiol compound, such as γ-mercaptopropyl trimethoxysilane or the like, may be used as an additive.

Examples of the organic solvent include Alcohols such as ethanol, isopropyl alcohol, n-butanol, isobutanol, tert-butanol, and the like; ketones such as acetone, methyl ethyl ketone, methyl isobutyl ketone, methyl amyl ketone, and the like; esters such as methyl acetate, ethyl acetate, butyl acetate, methyl lactate, ethyl lactate, butyl lactate, and the like; monocarboxylate esters such as methyl 2-oxypropionate, ethyl 2-oxypropionate, propyl 2-oxypropionate, butyl 2-oxypropionate, methyl 2-methoxypropionate, ethyl 2-methoxypropionate, propyl 2-methoxypropionate, butyl 2-methoxypropinate, and the like; polar solvents such as dimethylformamide, dimethyl sulfoxide, N-methyl pyrrolidone, and the like; ethers such as methyl cellosolve, cellosolve, butyl cellosolve, butyl carbitol, ethyl cellosolve acetate, and the like; propylene glycols and esters thereof, such as propylene glycol, propylene glycol monomethyl ether, propylene glycol monomethyl ether acetate, propylene glycol monoethyl ether acetate, propylene glycol monobutyl ether acetate, and the like; halogen-based solvents such as 1,1,1-trichloroethane, chloroform, and the like; ethers such as tetrahydrofuran, dioxane, and the like; aromatics such as benzene, toluene, xylene, and the like; fluorinated inert liquids such as perfluorooctane, perfluorotri-n-butylamine, and the like; and the like.

These solvents can be used alone or in combination of two or more.

The polymer of the present invention can also be produced by living polymerization such as living radical polymerization, living anionic polymerization, or the like.

In living radial polymerization, dormant pieces having active polymerization terminals protected by atoms or atomic groups reversibly generate radicals and react with monomers, thereby causing growth reaction to proceed. Even when a first monomer is consumed, the growth terminals do not lose activity and react with a sequentially added second monomer, and thus a bloc copolymer can be obtained. Examples of the living radical polymerization include atom transfer radical polymerization (ATRP), reversible addition-fragmentation radical polymerization (RAFT), nitroxide-mediated radical polymerization (NMP), organotellurium-mediated radical polymerization (TERP), and the like. Which of these is used is not particularly limited, but ATRP is preferred in view of the ease of control. ATRP is polymerization using an organic halogen compound or a sulfonyl halide compound, or the like as a polymerization initiator and a metal complex composed of a transition metal compound and a ligand as a catalyst.

Examples of the polymerization initiator which can be used in ATRP include 1-phenylethyl chloride, 1-phenylethy bromide, chloroform, carbon tetrachloride, 2-chloropropionitrile, α,α'-dichloroxylene, α,α'-dibromoxylene, hexakis (α-bromomethyl)benzene, alkyl esters having 1 to 6 carbon atoms of 2-halogenated carboxylic acids having 1 to 6 carbon atoms (for example, 2-chloropropionic acid, 2-bromopropionic acid, 2-chloroisobutyric acid, 2-bromoisobutyric acid, and the like), and the like.

More specific examples of alkyl esters having 1 to 6 carbon atoms of 2-halogenated carboxylic acids having 1 to 6 carbon atoms include methyl 2-chloropropionate, ethyl 2-chloropropionate, methyl 2-bromopropionate, ethyl 2-bromoisobutyrate, and the like.

The transition metal compound which can be used in ATRP is represented by Mⁿ⁺Xₙ.

The transition metal Mⁿ⁺ of the transition metal compound represented by Mⁿ⁺Xₙ can be selected from the group consisting of Cu⁺, Cu²⁺, Fe²⁺, Fe³⁺, Ru²⁺, Ru³⁺, Cr²⁺, Cr³⁺, Mo⁰, Mo⁺, Mo²⁺, Mo³⁺, W²⁺, W³⁺, Rh³⁺, Rh⁴⁺, Co⁺, Co²⁺, Re²⁺, Re³⁺, Ni⁰, Ni⁺, Mn³⁺, Mn⁴⁺, V²⁺, V³⁺, Zn⁺, Zn²⁺, Au⁺, Au²⁺, Ag⁺, and Ag²⁺.

X of the transition metal compound represented by Mⁿ⁺Xₙ can be selected from the group consisting of a halogen atom, an alkoxyl group having 1 to 6 carbon atoms, (SO₄)_{1/2}, (PO₄)_{1/3}, (HPO₄)_{1/2}, (H₂PO₄), triflate, hexafluorophosphate, methanesulfonate, arylsulfonate (preferably, benzenesulfonate or toluenesulfonate), SeR¹¹, CN, and R¹²COO. In this case, R¹¹ represents an aryl group, a linear or branched alkyl group having 1 to 20 carbon atoms (preferably 1 to 10 carbon atoms), and R¹² represents a hydrogen atom, a linear or branched alkyl group having 1 to 6 carbon atoms (preferably a methyl group) which may be substituted by halogen 1 to 5 times (preferably fluorine or chlorine 1 to 3 times).

In the transition metal compound represented by Mⁿ⁺xₙ, n represents the formula charge on metal, and is an integer of 0 to 7.

Examples of the ligand compound which can be coordination-bonded to the transition metal of the transition metal compound include a compound having a ligand containing one or more nitrogen atoms, oxygen atoms, phosphorus atoms, or sulfur atoms which can be coordinated with the transition metal through σ bond, a compound having a ligand containing two or more carbon atoms which can be coordinated with the transition metal through π bond, and a compound having a ligand which can be coordinated with the transition metal through µ bond or η bond.

The transition metal complex is not particularly limited, but is preferably a group 7, 8, 9, 10, or 11 transition metal complex, and more preferably a 0-valent copper, monovalent copper, divalent ruthenium, divalent iron, or divalent nickel complex.

When the center metal is copper, specific examples of the catalyst which can be used in ATRP include complexes with ligands such as 2,2'-bipyridyl and derivatives thereof, 1,10-phenanthroline and derivatives thereof, polyamines such as tetramethyl ethylene diamine, pentamethyl diethylene triamine, hexamethyl tris(2-aminoethyl)amine, and the like, and the like. Examples of a divalent ruthenium complex include dichlorotris(triphenylphosphine)ruthenium, dichlorotris(tributylphosphine)ruthenium, dichloro(cyclooctadiene)ruthenium, dichlorobenzene ruthenium, dichloro-p-cymene ruthenium, dichloro(norbornadiene)ruthenium, cis-dichlorobis(2,2'-bipyridine)ruthenium, dichlorotris(1,10-phenanthroline)ruthenium, carbonyl chlorohydrido tris(triphenylphosphine)ruthenium, and the like. Further, examples of a divalent iron complex include a bistriphenylphosphine complex, a triazacyclononane complex, and the like.

The living radical polymerization preferably uses a solvent.

Examples of the solvent used in the living radical polymerization include ester-based solvents such as ethyl acetate, butyl acetate, propylene glycol monomethyl ether acetate, and the like; ether-based solvents such as diisopropyl ether, dimethoxyethane, diethylene glycol dimethyl ether, and the like; halogen-based solvents such as dichloromethane, dichloroethane, and the like; aromatic solvents such as toluene, xylene, and the like; ketone-bases solvents such as methyl ethyl ketone, methyl isobutyl ketone, cyclohexanone, and the like; alcohol-based solvents such as methanol, ethanol, isopropanol, and the like; aprotic polar solvents such as dimethylformamide, dimethyl sulfoxide, and the like; and the like.

The solvents may be used alone or in combination of two or more.

The polymerization temperature of the living radical polymerization is preferably within a range of room temperature to 120°C.

When the polymer of the present invention is produced by the living radical polymerization, a metal derived from the transition metal compound used in polymerization may remain in the resultant polymer. The metal remaining in the resultant polymer may be removed by using activated alumina or the like after polymerization.

### [Lubricant composition]

The defoaming agent of the present invention can be preferably used as a defoaming agent of a lubricant composition, and the lubricant composition of the present invention contains the defoaming agent of the present invention.

The defoaming agent of the present invention has high defoaming performance and can be used without limit for, for example, a lubricant composition for drive-system devices, such as an automotive buffer, a transmission, a power steering, etc.

The content ratio of the defoaming agent of the present invention in the lubricant composition of the present invention is not particularly limited and, for example, within a range of 1 to 1,000 mass ppm, preferably within a range of 5 to 700 mass ppm, and more preferably within a range of 10 to 400 mass ppm of the total amount of the lubricant composition.

A known oil can be used as the lubricant base oil of the lubricant composition of the present invention, and may be mineral oil, synthetic oil, or a mixed oil of mineral oil and synthetic oil.

The mineral oil is, for example, mineral oil produced by refining a lubricant fraction obtained by vacuum distillation of the atmospheric residual oil, which is obtained by atmospheric distillation of crude oil, through one or more treatments of solvent deasphalting, solvent extraction, hydro-cracking, solvent dewaxing, catalytic dewaxing, hydrogeneration refining, and the like, and examples thereof include paraffinic mineral oil, naphthenic mineral oil, and the like.

The examples also include mineral oil produced by isomerizing mineral oil-based wax or wax (GTL wax) obtained by a Fischer-Tropsch process or the like, and the like.

Examples of the synthetic oil include polyolefins such as polybutene, α-olefin homopolymer and copolymer (for example, ethylene-α-olefin copolymer), and the like, various esters such as polyol esters, dibasic acid esters, phosphate esters, and the like, various ethers such as polyphenyl ether and the like, polyglycol, alkylbenzene, alkyl naphthalene, and the like.

The lubricant base oils may be used alone or in combination of two of more.

The dynamic viscosity at 100°C of the lubricant base oil is preferably within a range of 2 to 20 mm²/s, more preferably within a range of 2 to 15 mm²/s, and still more preferably within a range of 3 to 10 mm²/s.

When the dynamic viscosity at 100°C of the lubricant base oil is within the range described above, a fuel efficiency improving effect can be easily obtained because the evaporation loss is small and the power loss due to viscous resistance is not so large.

The paraffin content (may be referred to as "%Cp") of the lubricant base oil according to n-d-M ring analysis is preferably 70% or more, more preferably 75% or more, and still more preferably 80% or more.

The lubricant base oil having a paraffin content within the range described above has improved oxidation stability or the like.

The content ratio of the lubricant base oil in the lubricant composition is, for example, within a range of 65% to 95% by mass, preferably within a range of 70% to 95% by mass, and still more preferably within a range of 70% to 90% by mass of the total amount of the lubricant composition.

The lubricant composition of the present invention may contain the defoaming agent of the present invention and the lubricant base oil and may further contain other additives.

Examples of the other additives which may contained include additive such as an ashless cleaning agent, an ashless friction adjustor, an anti-wear agent, an extreme pressure agent, a viscosity index improver, a metal deactivator, a pour point depressant, a corrosion inhibitor, and the like. These additives may be used alone or in combination of two or more.

The content of each of the other additives can be properly adjusted within a range not impairing the effects of the present invention, and the content based on the total amount of the lubricant composition is generally 0.001% to 25% by mass, preferably 0.005% to 20% by mass, and more preferably 0.01% to 15% by mass.

The total content of the other additives based on the total amount of the lubricant composition is preferably 25% by mass or less, more preferably 20% by mass or less, and still more preferably 15% by mass or less.

Examples of the ashless cleaning agent include alkenyl succinic acid imide such as alkenyl succinic acid monoamide, alkenyl succinic acid bisimide, and the like, boron-modified alkenyl succinic acid imide, and the like.

Examples of the ashless friction adjustor include an aliphatic amine, a fatty acid ester, a fatty acid amide, a fatty acid, an aliphatic alcohol, an aliphatic ether, and the like each having at least one alkyl group or alkenyl group having 6 to 30 carbon atoms in the molecule.

Examples of the anti-wear agent or extreme pressure agent include sulfur-containing compounds such as zinc dithiophosphate and the like; phosphorus-containing compounds such as phosphite esters, phosphate esters, phosphonate esters, and amine salts or metal salts thereof, and the like; sulfur- and phosphorus-containing anti-wear agents such as thiophosphite esters, thiophosphate esters, thiophosphonate esters, and amine salts or metal salts thereof, and the like.

Examples of the viscosity index improver include polymethacrylate, dispersion-type polymethacrylate, olefinic copolymers (for example, ethylene-propylene copolymer and the like), dispersion-type olefinic copolymers, styrenebased copolymers (for example, styrene-diene copolymer, styrene-isoprene copolymer, and the like), and the like.

Examples of the metal deactivator include a benzotriazole-based compound, a tolyltriazole-based compound, an imidazole-based compound, a pyrimidine-based compound, and the like.

Examples of the pour point depressant include an ethylene-vinyl acetate copolymer, a condensate of chlorinated paraffin and naphthalene, a condensate of chlorinated paraffin and phenol, polymethacrylate, polyalkylstyrene, and the like.

Examples of the corrosion inhibitor include petroleum sulfonate, alkylbenzene sulfonate, dinonylnaphthalene sulfonate, alkenylsuccinate easters, polyhydric alcohol esters, and the like.

The lubricant composition of the present invention is preferably used for lubricating a drive portion of a machine provided with an internal combustion engine or electric motor.

Any one of machines provided with an internal combustion engine or electric motor can be used without limit as the machine which can use the lubricant composition of the present invention, and examples of the machine include automobiles (gasoline vehicles and electric vehicles), robots (industrial robots and entertainment robots), aircrafts (airplanes and helicopters), various electric household appliances, and the like.

### EXAMPLES

The present invention is specifically described below by using examples and comparative examples.

In addition, the present invention is not limited to the examples.

In the examples and comparative examples, the weight-average molecular weight (Mw) and number-average molecular weight (Mn) are values in terms of polystyrene based on gel permeation chromatography (GPC) measurement.

The GPC measurement conditions are as follows.

### [GPC measurement conditions]

Measurement apparatus: high-speed GPC apparatus "HLC-8320GPC" manufactured by Tosoh Corporation
Column: "TSK GUARDCOLUMN SuperHZ-L" manufactured by Tosoh Corporation + "TSK gel SuperHZM-N" manufactured by Tosoh Corporation + "TSK gel SuperHZM-N" manufactured by Tosoh Corporation + "TSK gel SuperHZM-N" manufactured by Tosoh Corporation + "TSK gel SuperHZM-N" manufactured by Tosoh Corporation
Detector: RI (differential refractometer)
Data processing: "EcoSEC Data Analysis Version 1.07" manufactured by Tosoh Corporation
Column temperature: 40°C
Developing solvent: tetrahydrofuran
Flow rate: 0.35 mL/min
Measurement sample: a measurement sample was prepared by dissolving 7.5 mg of sample in 10 ml of tetrahydrofuran and filtering the resultant solution with a microfilter.
Sample injection amount: 20 µL
Standard sample: monodisperse polystyrene described below having a known molecular weight was used according to the "HLC-8320GPC" measurement manual.

### (Monodisperse polystyrene)

"A-300" manufactured by Tosoh Corporation
"A-500" manufactured by Tosoh Corporation
"A-1000" manufactured by Tosoh Corporation
"A-2500" manufactured by Tosoh Corporation
"A-5000" manufactured by Tosoh Corporation
"F-1" manufactured by Tosoh Corporation
"F-2" manufactured by Tosoh Corporation
"F-4" manufactured by Tosoh Corporation
"F-10" manufactured by Tosoh Corporation
"F-20" manufactured by Tosoh Corporation
"F-40" manufactured by Tosoh Corporation
"F-80" manufactured by Tosoh Corporation
"F-128" manufactured by Tosoh Corporation
"F-288" manufactured by Tosoh Corporation

### (SYNTHESIS EXAMPLE 1: synthesis of defoaming agent (1))

In a glass flask provided with a stirring device, a thermometer, a condenser, and a dropping device, 30 parts by mass of 1,3-dimercapto-2-propanol, 215 parts by mass of 3-methacryloxypropyl tris(trimethylsiloxy)silane, 200 parts by mass of methyl ethyl ketone, and 0.1 parts by mass of NaH were charged. Then, stirring was started in a nitrogen atmosphere, and the temperature in the flask was increased to 60°C. Then, stirring was performed for 1.5 hours, obtaining 2 chains silicone monomer precursor (aa1) through a synthesis path below.

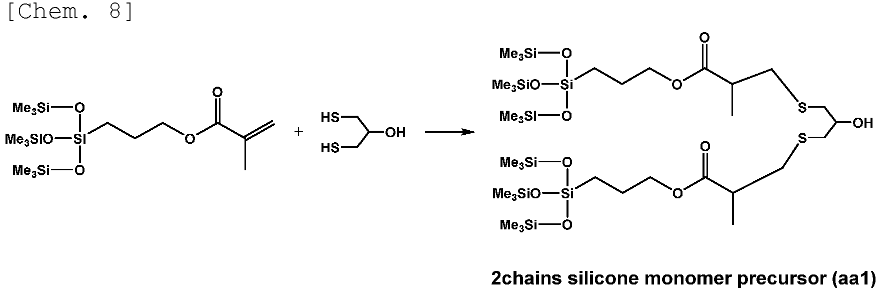

In a glass flask provided with a stirring device, a thermometer, a condenser, and a dropping device, 17.6 parts by mass of the 2 chains silicone monomer precursor (aa1), 20 parts by mass of n-butyl acetate, and 0.02 parts by mass of stannous octylate were charged. Then, stirring was started in an air stream, and the temperature in the flask was increased to 75°C. Then, 3 parts by mass of 2-isocyanatoethyl methacrylate was dropped over 15 minutes. After the completion of dropping, the temperature was increased to 80°C and reaction was performed by stirring for 1 hour. As a result of IR spectrum measurement, the disappearance of the absorption peak of the isocyanato group was confirmed. Therefore, a 2 chains silicone monomer (a1) represented by formula below was obtained.

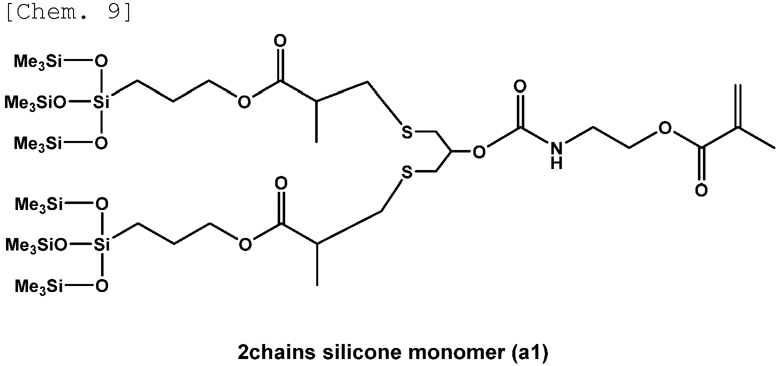

In a glass flask provided with a stirring device, a thermometer, a condenser, and a dropping device, 52 parts by mass of n-butyl acetate was charged as a solvent, and the temperature was increased to 85°C under stirring in a nitrogen stream. Then, prepared was a solution containing 30 parts by mass of the 2 chains silicone monomer (a1) dissolved in 50 parts by mass of n-butyl acetate, and 20 parts by mass of methoxypolyethylene glycol methacrylate (the number of repetitions of ethylene oxide chain: about 9). Further, a polymerization initiator solution was prepared by dissolving 3 parts by mass of tert-butylperoxy-2-ethyl hexanoate as a radical polymerization initiator in 15 parts by mass of n-butyl acetate. The resultant two types of dropping solutions were set to respective dropping devices and dropped simultaneously over 2 hours while the inside of the flask was kept at 85°C. After the completion of dropping, the mixture was stirred at 85°C for 4 hours, then heated to 110°C, and further stirred for 1 hour, producing a defoaming agent (1) including a polymer containing, as polymerization components, a 2 chains silicone monomer and a monomer having a polyoxyalkylene chain-containing group.

As a result of GPC measurement of the molecular weight of the resultant defoaming agent (1), the weight-average molecular weight (Mw) was 30,400.

### (SYNTHESIS EXAMPLE 2: synthesis of defoaming agent (2))

In a glass flask provided with a stirring device, a thermometer, a condenser, and a dropping device, 52 parts by mass of n-butyl acetate was charged as a solvent, and the temperature was increased to 85°C under stirring in a nitrogen stream. Then, prepared was a solution containing 25 parts by mass of the 2 chains silicone monomer (a1) dissolved in 50 parts by mass of n-butyl acetate, 25 parts by mass of methoxypolyethylene glycol methacrylate (the number of repetitions of ethylene oxide chain: about 9), and 5 parts by mass of methyl methacrylate. Further, a polymerization initiator solution was prepared by dissolving 3 parts by mass of tert-butylperoxy-2-ethyl hexanoate as a radical polymerization initiator in 15 parts by mass of n-butyl acetate. The resultant two types of dropping solutions were set to respective dropping devices and dropped simultaneously over 2 hours while the inside of the flask was kept at 85°C. After the completion of dropping, the mixture was stirred at 85°C for 4 hours, then heated to 110°C, and further stirred for 1 hour, producing a defoaming agent (2) including a polymer containing a 2 chains silicone monomer and a monomer having a polyoxyalkylene chain-containing group as polymerization components.

As a result of GPC measurement of the molecular weight of the resultant defoaming agent (2), the weight-average molecular weight (Mw) was 71,700.

### (SYNTHESIS EXAMPLE 3: synthesis of defoaming agent (3))

In a glass flask provided with a stirring device, a thermometer, a condenser, and a dropping device, 52 parts by mass of n-butyl acetate was charged as a solvent, and the temperature was increased to 85°C under stirring in a nitrogen stream. Then, prepared was a solution containing 20 parts by mass of the 2 chains silicone monomer (a1) dissolved in 50 parts by mass of n-butyl acetate, 4 parts by mass of 3-methacryloxypropyl tris(trimethylsiloxy)silane, 22 parts by mass of methoxypolyethylene glycol methacrylate (the number of repetitions of ethylene oxide chain: about 9), and 4 parts by mass of methyl methacrylate. Further, a polymerization initiator solution was prepared by dissolving 3 parts by mass of tert-butylperoxy-2-ethyl hexanoate as a radical polymerization initiator in 15 parts by mass of n-butyl acetate. The resultant two types of dropping solutions were set to respective dropping devices and dropped simultaneously over 2 hours while the inside of the flask was kept at 85°C. After the completion of dropping, the mixture was stirred at 85°C for 4 hours, then heated to 110°C, and further stirred for 1 hour, producing a defoaming agent (3) including a polymer containing a 2 chains silicone monomer, 3-methacryloxypropyl tris(trimethylsiloxy)silane, methyl methacrylate, and a monomer having a polyoxyalkylene chain-containing group as polymerization components.

As a result of GPC measurement of the molecular weight of the resultant defoaming agent (3), the weight-average molecular weight (Mw) was 50,700.

### (SYNTHESIS EXAMPLE 4: synthesis of defoaming agent (4))

In a glass flask provided with a stirring device, a thermometer, a condenser, and a dropping device, 52 parts by mass of n-butyl acetate was charged as a solvent, and the temperature was increased to 95°C under stirring in a nitrogen stream. Then, prepared was a solution was containing 39 parts by mass of the 2 chains silicone monomer (a1) dissolved in 133 parts by mass of n-butyl acetate, 8.5 parts by mass of 3-methacryloxypropyl tris(trimethylsiloxy)silane, 45 parts by mass of methoxypolyethylene glycol acrylate (the number of repetitions of ethylene oxide chain: about 9), and 16.7 parts by mass of benzyl methacrylate. Further, a polymerization initiator solution was prepared by dissolving 11 parts by mass of tert-butylperoxy-2-ethyl hexanoate as a radical polymerization initiator in 30 parts by mass of n-butyl acetate. The resultant two types of dropping solutions were set to respective dropping devices and dropped simultaneously over 2 hours while the inside of the flask was kept at 95°C. After the completion of dropping, the mixture was stirred at 95°C for 3 hours, then heated to 110°C, and further stirred for 1 hour, producing a defoaming agent (4) including a polymer containing a 2 chains silicone monomer, 3-methacryloxypropyl tris(trimethylsiloxy), silane, methyl methacrylate, and a monomer having a polyoxyalkylene chain-containing group as polymerization components.

As a result of GPC measurement of the molecular weight of the resultant defoaming agent (4), the weight-average molecular weight (Mw) was 27,000.

### (SYNTHESIS EXAMPLE 5: synthesis of defoaming agent (5))

In a glass flask provided with a stirring device, a thermometer, a condenser, and a dropping device, 50 parts by mass of the 2 chains silicone monomer precursor (aa1), 22 parts by mass of n-heptane, and 10.5 parts by mass of triethylamine were charged. Then, stirring was started in an air stream, and the temperature in the flask was increased to 40°C. Then, 5.2 parts by mass of acrylic acid chloride was dropped over 15 minutes. After the completion of dropping, reaction was performed by stirring for 3 hours, and then excessive acrylic acid chloride was deactivated by adding water. Then, extraction with citric acid was performed to obtain a 2 chains silicone monomer (a2) represented by formula below.

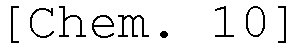

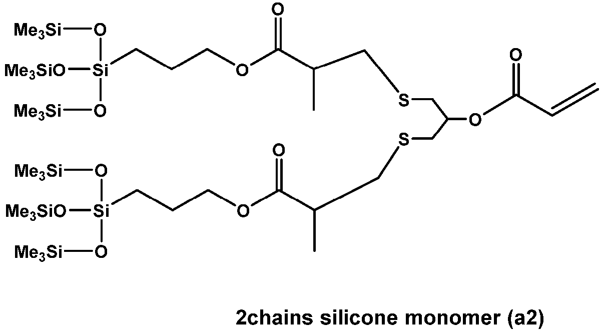

In a glass flask provided with a stirring device, a thermometer, a condenser, and a dropping device, 52 parts by mass of n-butyl acetate was charged as a solvent, and the temperature was increased to 95°C under stirring in a nitrogen stream. Then, prepared was a solution containing 20 parts by mass of the 2 chains silicone monomer (a2) dissolved in 50 parts by mass of n-butyl acetate, 4 parts by mass of 3-methacryloxypropyl tris(trimethylsiloxy)silane, 22 parts by mass of methoxypolyethylene glycol methacrylate (the number of repetitions of ethylene oxide chain: about 9), and 4 parts by mass of methyl methacrylate. Further, a polymerization initiator solution was prepared by dissolving 3 parts by mass of tert-butylperoxy-2-ethyl hexanoate as a radical polymerization initiator in 15 parts by mass of n-butyl acetate. The resultant two types of dropping solutions were set to respective dropping devices and dropped simultaneously over 2 hours while the inside of the flask was kept at 95°C. After the completion of dropping, the mixture was stirred at 85°C for 4 hours, then heated to 110°C, and further stirred for 1 hour, producing a defoaming agent (5) including a polymer containing a 2 chains silicone monomer, 3-methacryloxypropyl tris(trimethylsiloxy)silane, methyl methacrylate, and a monomer having a polyoxyalkylene chain-containing group as polymerization components.

As a result of GPC measurement of the molecular weight of the resultant defoaming agent (5), the weight-average molecular weight (Mw) was 17,000.

### (SYNTHESIS EXAMPLE 6: synthesis of defoaming agent (6))

In a glass flask provided with a stirring device, a thermometer, a condenser, and a dropping device, 200 parts by mass of a commercial silicone compound represented by formula below, 100 parts by mass of n-butyl acetate as a solvent, and 0.05 parts by mass of stannous octylate as a catalyst were charged. Then, stirring was started in an air stream, and the temperature in the flask was increased to 75°C. Then, 30 parts by mass of 2-isocyanatoethyl acrylate was dropped over 30 minutes. After the completion of dropping, the temperature was increased to 80°C and reaction was performed by stirring for 3 hours.

As a result of IR spectrum measurement of the resultant product, the disappearance of the absorption peak of the isocyanato group was confirmed. Therefore, a 1 chain silicone monomer represented by formula below was obtained. 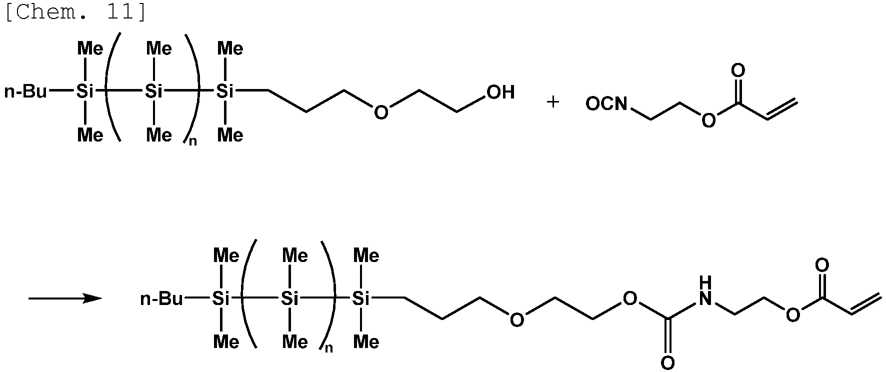 (In the formula, n represents the number of repetitions, and the number average value of n is 10.)

In a glass flask provided with a stirring device, a thermometer, a condenser, and a dropping device, 7.5 parts by mass of 1,3-dimercapto-2-propanol, 138 parts by mass of the 1 chain silicone monomer obtained as described above, 100 parts by mass of n-butyl acetate, and 2.0 parts by mass of triethylamine were charged. Then, stirring was started in a nitrogen atmosphere, and the temperature in the flask was increased to 80°C. Then, stirring was performed for 10 hours, producing 2 chains silicone monomer precursor (aa3) through a synthesis path described below.

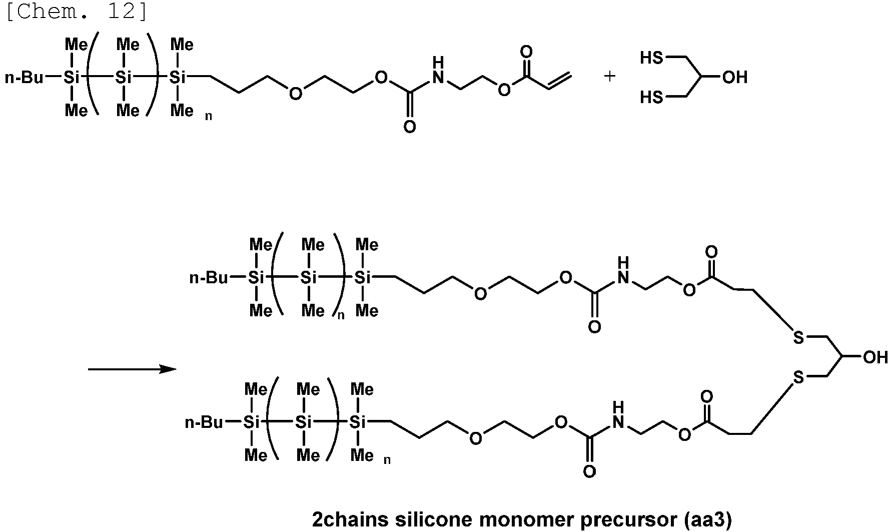

In a glass flask provided with a stirring device, a thermometer, a condenser, and a dropping device, 60 parts by mass of the 2 chains silicone monomer precursor (aa3), 40 parts by mass of n-butyl acetate, and 0.02 parts by mass of stannous octylate were charged. Then, stirring was started in an air stream, and the temperature in the flask was increased to 75°C. Then, 4.1 parts by mass of 2-isocyanatoethyl methacrylate was dropped over 15 minutes. After the completion of dropping, the temperature was increased to 80°C and reaction was performed by stirring for 3 hours. As a result of IR spectrum measurement, the disappearance of the absorption peak of the isocyanato group was confirmed. Therefore, a 2 chains silicone monomer (a3) represented by formula below was obtained.

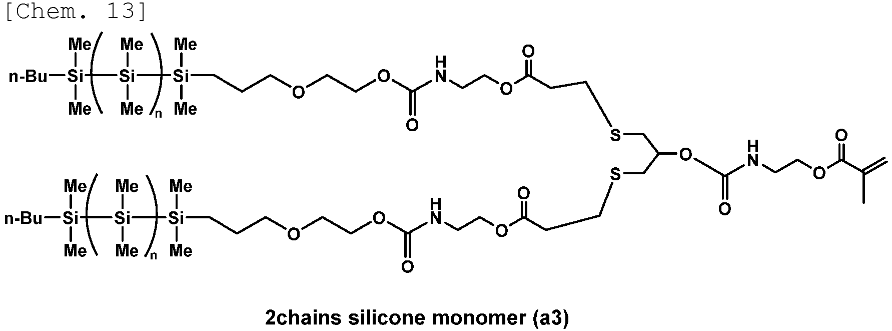

In a glass flask provided with a stirring device, a thermometer, a condenser, and a dropping device, 34 parts by mass of n-butyl acetate as a solvent was charged, and the temperature was increased to 85°C under stirring in a nitrogen stream. Then, prepared was a solution containing 13 parts by mass of the 2 chains silicone monomer (a3) dissolved in 33 parts by mass of n-butyl acetate, 15 parts by mass of methoxypolyethylene glycol methacrylate (the number of repetitions of ethylene oxide chain: about 9), 3 parts by mass of methyl methacrylate, and 3 parts by mass of 3-methacryloxypropyl tris (trimethylsiloxy) silane. Further, a polymerization initiator solution was prepared by dissolving 2 parts by mass of tert-butylperoxy-2-ethyl hexanoate as a radical polymerization initiator in 10 parts by mass of n-butyl acetate. The resultant two types of dropping solutions were set to respective dropping devices and dropped simultaneously over 2 hours while the inside of the flask was kept at 85°C. After the completion of dropping, the mixture was stirred at 85°C for 4 hours, then heated to 110°C, and further stirred for 1 hour, producing a defoaming agent (6) including a polymer containing a 2 chains silicone monomer and a monomer having a polyoxyalkylene chain-containing group as polymerization components.

As a result of GPC measurement of the molecular weight of the resultant defoaming agent (6), the weight-average molecular weight (Mw) was 25,000.

### (SYNTHESIS EXAMPLE 7: synthesis of defoaming agent (7))

In a glass flask provided with a stirring device, a thermometer, a condenser, and a dropping device, 52 parts by mass of n-butyl acetate was charged as a solvent, and the temperature was increased to 90°C under stirring in a nitrogen stream. Then, prepared was a solution containing 20 parts by mass of a commercial 3 chains silicone compound (a4) (Mw: 570 to 620) represented by formula below, dissolved in 50 parts by mass of n-butyl acetate, 4 parts by mass of 3-methacryloxypropyl tris(trimethylsiloxy)silane, 22 parts by mass of methoxypolyethylene glycol methacrylate (the number of repetitions of ethylene oxide chain: about 9), and 4 parts by mass of methyl methacrylate. Further, a polymerization initiator solution was prepared by dissolving 5 parts by mass of tert-butylperoxy-2-ethyl hexanoate as a radical polymerization initiator in 15 parts by mass of n-butyl acetate. The resultant two types of dropping solutions were set to respective dropping devices and dropped simultaneously over 2 hours while the inside of the flask was kept at 90°C. After the completion of dropping, the mixture was stirred at 90°C for 2 hours, then heated to 110°C, and further stirred for 1.5 hours, producing a defoaming agent (7) including a polymer containing a 3 chains silicone monomer, 3-methacryloxypropyl tris(trimethylsiloxy)silane, methyl methacrylate, and a monomer having a polyoxyalkylene chain-containing group as polymerization components.

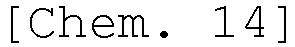

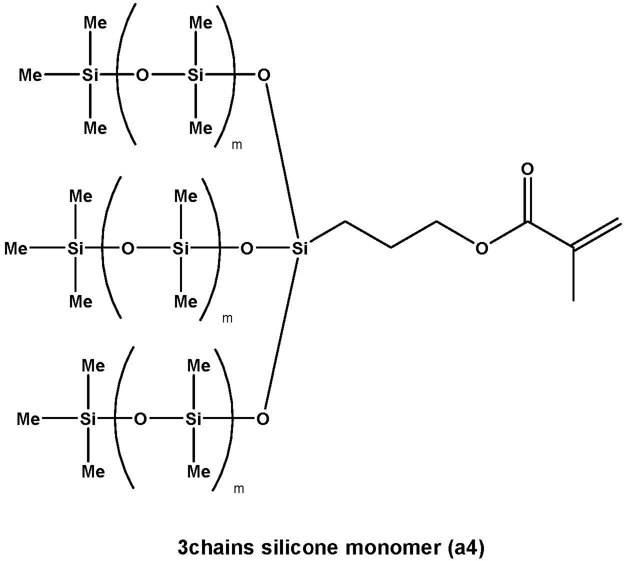

As a result of GPC measurement of the molecular weight of the resultant defoaming agent (7), the weight-average molecular weight (Mw) was 44,200.

### (SYNTHESIS COMPARATIVE EXAMPLE 1: synthesis of defoaming agent (1'))

A defoaming agent (1') including a polymer containing a 1 chain silicone monomer and a monomer having a polyoxyalkylene chain-containing group as polymerization components was obtained by performing polymerization reaction in the same manner as in Synthesis Example 1 except that 20 parts by mass of 3-methacryloxypropyl tris(trimethylsiloxy)silane represented by formula below was used in place of the 2 chains silicone monomer (a1).

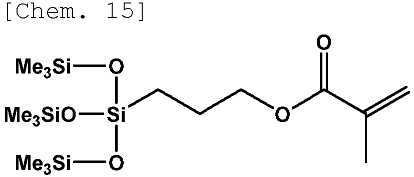

As a result of GPC measurement of the molecular weight of the resultant defoaming agent (1'), the weight-average molecular weight (Mw) was 40,900.

### (SYNTHESIS COMPARATIVE EXAMPLE 2: synthesis of defoaming agent (2'))

A defoaming agent (2') including a polymer containing a 1 chain silicone monomer and a monomer having a polyoxyalkylene chain-containing group as polymerization components was obtained by performing polymerization reaction in the same manner as in Synthesis Example 1 except that 20 parts by mass of 1 chain silicone monomer represented by formula below was used in place of the 2 chains silicone monomer (a1). 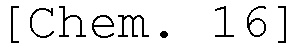 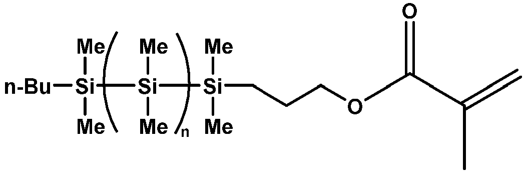 (n represents the number of repetitions, and the number average value of n is 10.)

As a result of GPC measurement of the molecular weight of the resultant defoaming agent (2'), the weight-average molecular weight (Mw) was 24,500.

Commercial dimethyl silicone ("KF-96-60,000cs" manufactured by Shin-Etsu Silicone Co., Ltd.) represented by formula below was separately prepared as a defoaming agent (3').

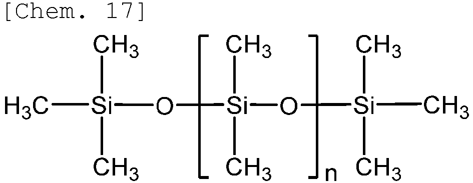

The defoaming performance of the defoaming agent was evaluated by a defoaming test described below using each of the defoaming agents produced as described above. The results are shown in Table 1.

### (Preparation of lubricant composition)

A lubricant composition was prepared by adding a defoaming agent shown in Table 1 in an amount shown in Table 1 using a dilution solvent shown in Table 1, to 100 parts by mass of a base lubricant containing a lubricant base oil (paraffinic mineral oil) as a main component and small amounts of various additives (a viscosity index improver, a phosphite ester compound, a thiazole compound, a calcium-based cleaning agent, a metal deactivator, an ashless dispersant, an antioxidant, etc.).

### (Foaming test)

A foaming test was performed at each of 80°C and 120°C using the resultant lubricant composition according to a homogenizer method disclosed in Japanese Unexamined Patent Application Publication No. 2008-120880. Specifically, the lubricant composition was stirred using a homogenizer ("T. K. Robomix" manufactured by Primix Corporation) provided with a generator shaft ("Minimixer" manufactured by Primix Corporation) according to conditions described below. A foaming amount was determined by subtracting a reading (mL) of the oil level before stirring from a reading (mL) of the foaming surface 3 seconds after the finish of stirring. The smaller foaming amount indicates the more excellent defoaming property.

### [Measurement conditions of foaming test]

Rotational speed: 16,000 rpm
Oil temperature: 80°C and 120°C
Oil amount: 80 ml
Vessel: 200 ml measuring cylinder (inner diameter ϕ: 36 mm)
Stirring time: 1 minute

**[Table 1]**

| | | Example1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|
| Defoaming agent | | Defoaming agent (1) | Defoaming agent (2) | Defoaming agent (3) | Defoaming agent (4) | Defoaming agent (5) | Defoaming agent (6) | Defoaming agent (7) | - | Defoaming agent (1') | Defoaming agent (2') | Defoaming agent (3') |
| Diluent | | Kerosene | Kerosene | Kerosene | Kerosene | Kerosene | Kerosene | Kerosene | - | Kerosene | Kerosene | Kerosene |
| Adding amount [mass ppm] | | 100 | 100 | 100 | 100 | 100 | 100 | 100 | - | 100 | 100 | 20 |
| Amount of effective component [% by mass] | | 1 | 1 | 1 | 1 | 1 | 1 | 1 | - | 1 | 1 | 1 |
| Foaming amount [mL] | 80°C | 0 | 0 | 0 | 0 | 0 | 10 | 0 | 20 | 10 | 100 | 100 |
| | 120°C | 0 | 0 | 0 | 0 | 10 | 36 | 32 | 50 | 100 | 100 | 100 |

The evaluation results shown in Table 1 indicate that the defoaming agent using a 2 chains silicone monomer exhibits the excellent defoaming property even in a high temperature environment. On the other hand, it is found that the satisfactory defoaming property cannot be obtained in a high temperature environment by the defoaming agent (using 1 chain silicone monomer) not using a 2 chains silicone monomer.

## Claims

1. A defoaming agent comprising a polymer having, as at least a polymerization component, a polymerizable monomer (A) having two or more groups represented by general formula (a) below, 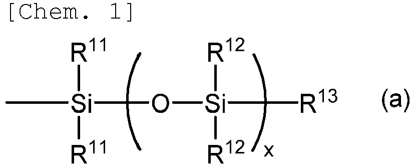 (in the general formula (a),
R¹¹s are each independently an alkyl group having 1 to 6 carbon atoms, a phenyl group, or a group represented by - OSi(R¹⁴)₃ (R¹⁴ are each independently an alkyl group having 1 to 6 carbon atoms or a phenyl group);
R¹²s are each independently an alkyl group having 1 to 6 carbon atoms or a phenyl group;
R¹³ is an alkyl group having 1 to 6 carbon atoms or a phenyl group; and
x represents the number of repetitions).

2. The defoaming agent according to Claim 1, wherein the polymerizable monomer (A) is a compound represented by general formula (a-1) below, 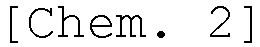 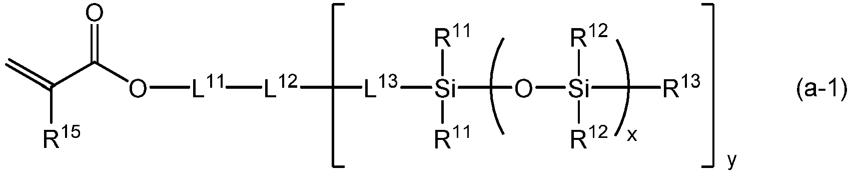 (in the general formula (a-1),
R¹¹, R¹², R¹³, and x are the same as R¹¹, R¹², R¹³, and x, respectively, in the general formula (a);
R¹⁵ is a hydrogen atom or a methyl group;
L¹¹ and L¹³ are each independently a divalent organic group or a single bond;
y is an integer within a range of 2 to 5; and
L¹² is a (y + 1)-valent organic group).

3. The defoaming agent according to Claim 1 or 2, wherein the polymerization component contains a polymerizable monomer (B) having one or more selected from the group consisting of an alkyl group having 1 to 18 carbon atoms, an aromatic group having 6 to 18 carbon atoms, a group containing a polyoxyalkylene chain, and a group containing a polyester chain.

4. The defoaming agent according to Claim 3, wherein the polymerizable monomer (B) is one or more selected from the group consisting of a compound represented by general formula (b-1) below, a compound represented by general formula (b-2) below, a compound represented by general formula (b-3) below, and a compound represented by general formula (b-4) below, 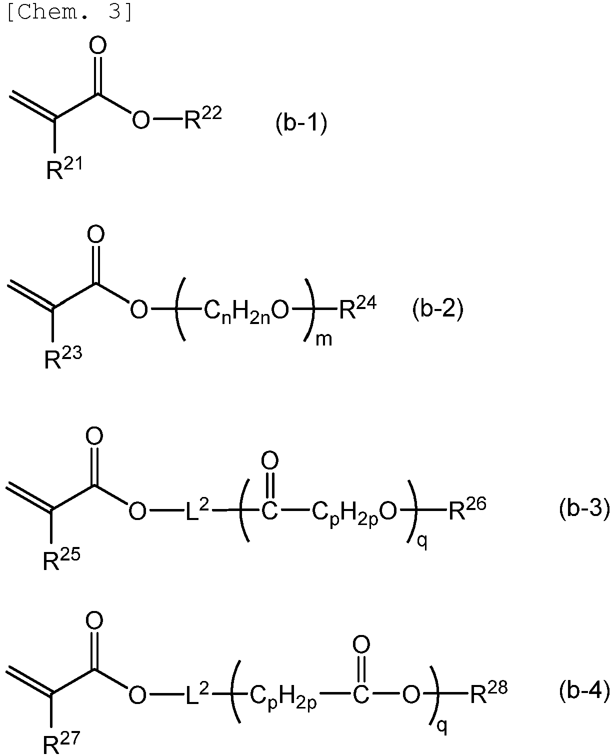 (in the general formulae (b-1), (b-2), (b-3), and (b-4),
R²¹ is a hydrogen atom or a methyl group;
R²² is an alkyl group having 1 to 18 carbon atoms or a phenyl group;
R²³ is a hydrogen atom or a methyl group;
R²⁴ is a hydrogen atom, an alkyl group having 1 to 18 carbon atoms, or a phenyl group;
R²⁵ is a hydrogen atom or a methyl group;
R²⁶ is an alkyl group having 1 to 18 carbon atoms or an alkyl group having 1 to 18 carbon atoms and an ether bond;
R²⁷ is a hydrogen atom or a methyl group;
R²⁸ is an alkyl group having 1 to 18 carbon atoms or an alkyl group having 1 to 18 carbon atoms and an ether bond;
L² is a divalent organic group or a single bond;
n is an integer within a range of 1 to 4;
m represents the number of repetitions;
p is an integer within a range of 1 to 10; and
q represents the number of repetitions).

5. The defoaming agent according to Claim 1 or 2, wherein the polymerization component contains a polymerizable monomer (C) having a group represented by the general formula (a).

6. The defoaming agent according to Claim 5, wherein the polymerizable monomer (C) is a compound represented by general formula (c-1) below, 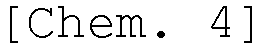 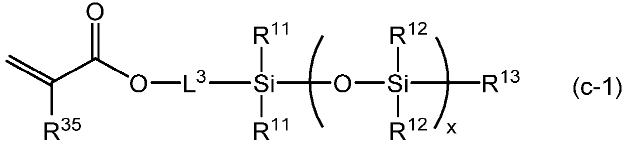 (in the general formula (c-1),
R¹¹, R¹², R¹³, and x are the same as R¹¹, R¹², R¹³, and x, respectively, of the general formula (a);
R³⁵ is a hydrogen atom or a methyl group; and
L³ is a divalent organic group or a single bond).

7. The defoaming agent according to Claim 1 or 2, wherein the ratio of the polymerizable monomer (A) in the total amount of the polymerization component is within a range of 20% to 80% by mass.

8. The defoaming agent according to Claim 1 or 2, wherein the weight-average molecular weight is within a range of 3,000 to 150,000.

9. A lubricant composition comprising a lubricant base oil and the defoaming agent according to Claim 1 or 2.

10. The lubricant composition according to Claim 9, wherein the lubricant composition is used for lubricating a drive portion of a machine provided with an internal combustion engine or an electric motor.

11. The lubricant composition according to Claim 9, wherein the lubricant composition is used for lubricating a drive portion of an automobile provided with an internal combustion engine or an electric motor.

12. A machine comprising a drive portion using the lubricant composition according to Claim 9.
